# EUROPÄISCHE PATENTANMELDUNG

(11) **EP 4 538 912 A1**
(43) Veröffentlichungstag der Anmeldung: **16.04.2025**
(21) Anmeldenummer: 23203122.9
(22) Anmeldetag: 12.10.2023
(51) Int. Cl.: G06F 21/57, G06F 21/64

(54) **ATTESTIERUNGSKOMPONENTE FÜR INVENTARISIERUNG VORHANDENER HARDWAREKOMPONENTEN UND SOFTWAREKOMPONENTEN**

(71) Anmelder: Siemens Aktiengesellschaft, 80333 München (DE)
(72) Erfinder: Falk, Rainer, 85435 Erding (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft eine Attestierungskomponente ausgebildet für ein Unified Extensible Firmware Interface (222) eines technischen Systems (1),
die Attestierungskomponente aufweisend:
- eine Erfassungskomponente, ausgebildet einen Inventarisierungsdatensatz (221) zu erstellen, wobei der Inventarisierungsdatensatz (221) eindeutige Identifizierungsdaten zu:
o allen aktuell vorhandenen Hardwarekomponenten und/oder
o allen aktuell vorhandenen Softwarekomponenten des technischen Systems (1) enthält,

- eine Vergleichskomponente, ausgebildet ein Vergleichsergebnis (2221) durch ein Vergleichen des Inventarisierungsdatensatzes (221) und einem Referenzdatensatz zu erstellen, und
- eine Bereitstellungskomponente, ausgebildet das Vergleichsergebnis (2221) bereitzustellen.

Außerdem betrifft die Erfindung ein Unified Extensible Firmware Interface (222), einen Hauptprozessor (22), ein Gerät (2) und ein technisches System (1) sowie ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft eine Attestierungskomponente ausgebildet für ein Unified Extensible Firmware Interface eines technischen Systems. Außerdem betrifft die Erfindung ein Unified Extensible Firmware Interface, einen Hauptprozessor, ein Gerät und ein technisches System sowie ein zugehöriges Verfahren.

### Beschreibung des Stands der Technik

Offene Compute-Plattformen und Industrial-PCs (IPCs) setzen sich typischerweise aus einem Mainboard, einen oder mehreren Prozessorbausteinen (CPU), externen Arbeitsspeichern (RAM) und persistenten Speichern (HDD oder SSD) zusammen. Sie werden direkt an Endkunden verkauft oder von Geräteherstellern in komplexeren Systemen integriert. Dabei können über Schnittstellen Erweiterungsmodule integriert werden (z.B. Peripheral Component Interconnect Express (PCIe)) oder Sensoren, Aktuatoren und Ein-/Ausgabegeräte (Human Machine Interface (HMI)) angeschlossen werden. Auch eine Anbindung weiterer Steuergeräte (z.B. Programmable Logic Controller (PLC)) ist möglich. Die Unified Extensible Firmware Interface (UEFI) Spezifikation mit deren Referenzimplementierungen (z.B. Tianocore EDK2, uboot) wird in der Praxis weit verbreitet zur Plattforminitialisierung und als Schnittstelle zum Bootloader bzw. zum Betriebssystem (operating system (OS)) verwendet.

Ein Unified Extensible Firmware Interface (UEFI), auch als einheitliche erweiterbare Firmware-Schnittstelle bezeichnet, ist ein Softwareprogramm, das die Firmware eines Computers mit seinem Betriebssystem (OS) verbindet. Wie ein Basic Input/Output System (BIOS) wird UEFI vom Hersteller installiert und ist das erste Programm, das beim Booten eines Computers startet. Es prüft, welche Hardwarekomponenten angeschlossen sind, weckt die Komponenten auf und übergibt sie an das Betriebssystem.

Der IPC bzw. die offene Compute-Plattform ist in einem Gesamtsystem (insbesondere ein Automatisierungssystem) häufig eine zentrale Komponente mit der höchsten Leistungsfähigkeit. Ein Hersteller, insbesondere Maschinenbauer, bereitet für Systeme oder Geräte üblicherweise mindestens eine Basis-Firmware vor, welche insbesondere auf IPCs oder offenen Compute-Plattform läuft. Die Basis-Firmware kann vom Endanwender oftmals erweitert werden. So können vom Endanwender für einen bestimmten Einsatzzweck Teilkomponenten zur Erweiterung des Gesamtsystems gewählt und integriert werden. Dadurch, dass die Basis-Firmware vom Endanwender erweiterbar ist, ist ein Risiko für eine Manipulation vorhanden.

Es ist Secure Boot (oftmals auch als "Verified Boot" bezeichnet) bekannt. Hierbei prüft eine Komponente der Boot-Kette (z.B. Bootloader) die nächste Stufe (z.B. Kernel) auf Integrität und Authentizität, typischerweise unter Verwendung von digitalen Signaturen. Secure Boot wird zudem durch diverse Chip-Hersteller in CPUs unterstützt (z.B. Freescale/NXP High Assurance Boot für die i.MX6 Prozessorserie, oder Intel BootGuard). Hierbei prüft ein unveränderbarer Programmcode der CPU (Boot-ROM) die Integrität und Authentizität der nächsten Stufe und bildet somit eine feste vertrauenswürdige Basis ("static root-oftrust"). Einige dieser Mechanismen, z.B. Intel BootGuard, bieten im Zusammenhang mit Secure Boot auch die Möglichkeit, einen fehlgeschlagenen Integritätscheck nur zu loggen und mit der Bootsequenz fortzufahren. Auch ist ein UEFI Secure Boot bekannt.

Weiterhin ist Measured Boot (oftmals auch "Trusted Boot") bekannt. Measured Boot findet typischerweise unter Verwendung eines Trusted Platform Modules (TPM) statt. Hierbei bildet jede Boot-Komponente eine kryptographische Prüfsumme der nächsten Boot-Komponente. Die Prüfsummen werden anschließend in speziellen Registern, sog. Platform Configuration Registers (PCRs), über eine sogenannte Extend-Operation abgespeichert, die den jeweils alten PCR-Wert mit einem neuen Wert verknüpft. Die PCRs enthalten somit Referenzen auf den Zustand des Gerätes (Integer/Nicht integer) für jede Boot-Komponente. Anschließend lässt sich somit nachverfolgen, ob und gegebenenfalls welche Komponente(n) beim Laden (un)verändert waren. Intel CPUs bieten beispielsweise mit der BootGuard Technologie Unterstützung für Measured Boot.

Im Zusammenhang mit Measured Boot ist das sog. Remote Attestation bekannt, worin die Liste an PCR-Werten zudem von einem im TPM gespeicherten privaten Schlüssel signiert werden kann. Die Signatur und die Liste können anschließend einer anderen Instanz (z.B. einem Server) zur Überprüfung weitergegeben werden. Zwar kann mit Measured Boot zu einem späteren Zeitpunkt eine veränderte Messung einer Boot-Komponente festgestellt werden, allerdings kann der Mechanismus nicht verwendet werden um die Ausführung von Schadcode, besonders unter Bedingungen wie fault-injection, zu verhindern.

Von Google ist der Titan Chip bekannt, welcher zusätzlich zu der Funktionalität eines Trusted Platform Moduls (TPM) aktiv auf den Programmcodespeicher für Firmware von Komponenten (z.B. UEFI) zugreifen und diese auf Integrität prüfen kann.

Es sind Physical Unclonable Functions (PUFs) bekannt. Kleine Schwankungen im Halbleiterherstellungsprozess sorgen für minimale Unterschiede im elektrischen Verhalten in sonst identischen Chips. PUFs sind typischerweise digitale/mixedsignal Schaltungen, die solche Merkmale verstärken, um Chipspezifische Identifier, z.B. zum Authentisieren einer Hardware und um Schlüssel zu erzeugen/abzuspeichern. Sowohl die Anwendungsfälle für Authentisierung, also auch Schlüsselspeicherung, sind mit einer Charakterisierungsphase verbunden, wo die PUF ausgelesen und entsprechende Referenzdaten (z.B. Challenge-Response-List für eine Authentisierung) generiert werden.

Die Aufgabe der Erfindung besteht darin, eine Lösung für einen verbesserten Schutz vor Manipulation für erweiterbare Computersysteme bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Attestierungskomponente ausgebildet für ein Unified Extensible Firmware Interface (UEFI) eines technischen Systems,
die Attestierungskomponente aufweisend:
- eine Erfassungskomponente, ausgebildet einen Inventarisierungsdatensatz zu erstellen,
   wobei der Inventarisierungsdatensatz eindeutige Identifizierungsdaten zu:
   ∘ allen aktuell vorhandenen Hardwarekomponenten und/oder
   ∘ allen aktuell vorhandenen Softwarekomponenten des technischen Systems enthält,
- eine Vergleichskomponente, ausgebildet ein Vergleichsergebnis durch ein Vergleichen des Inventarisierungsdatensatzes und einem Referenzdatensatz zu erstellen, und
- eine Bereitstellungskomponente, ausgebildet das Vergleichsergebnis bereitzustellen.

Die Attestierungskomponente ist auch als eine UEFI-Erweiterung bezeichenbar.

Der Inventarisierungsdatensatz enthält somit eine Inventarisierung aller aktuell vorhandenen Hardwarekomponenten und/oder aller aktuell vorhandenen Softwarekomponenten des technischen Systems. Die eindeutigen Identifizierungsdaten zu allen aktuell vorhandenen Hardwarekomponenten und/oder allen aktuell vorhandenen Softwarekomponenten sind insbesondere als eindeutige Angaben, Identifier und/oder eindeutige Identifizierungen, insbesondere eine Seriennummer, ein Gerätezertifikat und/oder ein Komponenten-Fingerprint, der einzelnen Hardwarekomponenten und/oder Softwarekomponenten zu verstehen. Für individuelle Komponenten-Fingerprints sind die aktuell vorhandenen Hardwarekomponenten (Teilkomponenten) des technischen Systems insbesondere mit PUFs (Physical Unclonable Function) ausgestattet.

Dass der Inventarisierungsdatensatz eindeutige Identifizierungsdaten zu "allen" aktuell vorhandenen Hardwarekomponenten und/oder "allen" aktuell vorhandenen Softwarekomponenten des technischen Systems enthält, ist so zu verstehen, dass ein vollständiges Inventar zu den relevanten Hardwarekomponenten und/oder relevanten Softwarekomponenten des technischen Systems vorliegt. Es sind auf dem technischen System somit keine relevanten Hardwarekomponenten und/oder relevanten Softwarekomponenten vorhanden, für welche der Inventarisierungsdatensatz keine eindeutiges Identifizierungsdatum enthält.

Die vorhandenen Hardware- und/oder Softwarekomponenten sind auch als vorliegende Hardware- und/oder Softwarekomponenten bezeichenbar.

Insbesondere sind die Hardware- und/oder Softwarekomponenten direkt auf dem technischen System vorhanden. Alternative können die Softwarekomponenten auch extern des technischen Systems vorhanden sein, insbesondere ausgelagert sein, insbesondere in einer Cloud, und das technische System enthält eine Referenz und/oder einen Zugriff zu den Softwarekomponenten. Somit sind die Softwarekomponenten in diesem Fall indirekt auf dem technischen System vorhanden.

Der Inventarisierungsdatensatz ist auch als Inventarisierung von Hardwarekomponenten (HBOM; Hardware Bill of Materials) und/oder Softwarekomponenten (SBOM; Software Bill of Materials) bezeichenbar.

Die Erfassungskomponente ist somit ausgebildet alle aktuell auf dem technischen System vorliegenden/vorhandenen Hardwarekomponenten und oder Softwarekomponenten zu erfassen.

Der Referenzdatensatz ist auch als eine Referenzinformation bezeichenbar bzw. enthält eine Referenzinformation.

Die Erfindung schlägt somit insbesondere für IPCs und offenen Compute-Plattformen eine Erweiterung für UEFI vor, um eine Inventarisierung von Hardware- und Softwarekomponenten eines Gesamtsystems durchzuführen und somit deren Integrität und Authentizität entlang der Lieferkette und am Einsatzort zu verbessern. Dafür bietet die Erfindung eine Möglichkeit, so früh wie möglich im Bootprozess eine Inventarisierung aller Hardwarekomponenten und/oder aller Softwarekomponenten durchzuführen und diese direkt auf ihre Gültigkeit zu prüfen und/oder auf geschützte Weise zur weiteren Auswertung bereitzustellen.

Die Erfindung bietet den Vorteil, dass die für einen bestimmten Einsatzzweck gewählten und integrierten Teilkomponenten nicht nur entlang der Lieferkette vor Manipulation oder Austausch geschützt werden, sondern auch langfristig an deren Einsatzort. Dadurch, dass das UEFI als hoch privilegierte Software am Anfang des Boot Vorgangs (gibt UEFI-Boot-Time und Runtime-Services) zum Einsatz kommt, die Plattforminitialisierung durchführt und im Anschluss weitere Software (Bootloader, OS) ausführt, findet eine weitreichende und vertrauenswürdige Inventarisierung von Hardware und Software statt.

Zusammengefasst führt die Erfindung zu einer Verbesserung der Integrität und Authentizität von Hardware- und Softwarekomponenten, insbesondere auf IPCs, offenen Compute-Plattformen und Automatisierungssystemen.

In einer Weiterbildung der Erfindung wurde der Referenzdatensatz:
- durch die Attestierungskomponente erzeugt und/oder
- von der Attestierungskomponente geladen und/oder
- extern der Attestierungskomponente erzeugt und/oder
- aus mehreren Teil- Referenzdatensätzen zusammengesetzt.

Der Referenzdatensatz/Referenzinformation wird insbesondere durch den Gerätehersteller beim ersten Bootvorgang initial mithilfe der Attestierungskomponente/UEFI-Erweiterung selbst erzeugt.

Der Referenzdatensatz/Referenzinformation kann insbesondere aber auch von extern konfiguriert werden, insbesondere durch eine digital signierte Konfigurationsdatei oder durch einen Gerätehersteller eines Geräts des technischen Systems.

Des Weiteren kann sich der Referenzdatensatz/Referenzinformation aus mehreren Teil-Referenzinformationen zusammensetzten, wodurch es den Stakeholdern entlang der Lieferkette ermöglicht wird, nur die jeweils ergänzten Komponenten hinzuzufügen.

In einer weiteren Weiterbildung der Erfindung ist die Bereitstellungskomponente ausgebildet, an:
- eine Komponente des technischen Systems und/oder
- nach extern des technischen Systems
bereitzustellen.

In einer weiteren Weiterbildung der Erfindung ist die Bereitstellungskomponente ausgebildet den Inventarisierungsdatensatz bereitzustellen.

Somit wird das Vergleichsergebnis und/oder der Inventarisierungsdatensatz lokal (insbesondere für die auf dem Gerät laufenden Applikationen) und/oder extern/remote (insbesondere an ein SIEM-System und/oder eine Cloud) bereitgestellt, um dort verwendet zu werden und insbesondere um dort weitere Aktionen abzuleiten und insbesondere auszuführen.

In einer weiteren Weiterbildung der Erfindung weisen:
- der Inventarisierungsdatensatz und/oder
- das Vergleichsergebnis
eine kryptographische Beglaubigung auf.

Die kryptographische Beglaubigung ist insbesondere als ein kryptographischer Schutz (z.B. digitale Signatur), insbesondere mithilfe eines kryptographischen Schlüssels ausgebildet. Zur sicheren Speicherung kryptographischer Schlüssel und/oder kryptographische Beglaubigung wird insbesondere ein Secure Element an die UEFI-Erweiterung, d.h. die erfindungsgemäße Attestierungskomponente angebunden.

In einer weiteren Weiterbildung der Erfindung ist die Attestierungskomponente:
- in einen Programmcode des Unified Extensible Firmware Interface (UEFI) integriert und/oder
- als ein für das Unified Extensible Firmware Interface (UEFI) ladbares Modul ausgebildet.

Die Attestierungskomponente, auch als UEFI-Erweiterung bezeichenbar, selbst, ist somit entweder fest in den restlichen UEFI-Programmcode, integriert, d.h. darin enthalten oder die Attestierungskomponente wird als externes Modul oder Treiber im Zuge einer UEFI-Initialisierung geladen.

In einer weiteren Weiterbildung der Erfindung weist die Attestierungskomponente einen Authentizitäts- und/oder Integritätsschutz auf.

Der Authentizitäts- und/oder Integritätsschutz ist insbesondere durch einen Secure Boot, insbesondere durch digitale Signaturen oder Hash-Whitelisting, umsetzbar.

In einer weiteren Weiterbildung der Erfindung ist die Erfassungskomponente ausgebildet, die eindeutigen Identifizierungsdaten zu allen aktuell vorhandenen Hardwarekomponenten des technischen Systems des Inventarisierungsdatensatzes durch:
- ein Beobachten von mindestens einem Initialisierungsvorgang der Hardwarekomponenten, insbesondere durch ein Loggen, einer Aktivität mindestens einer der allen aktuell vorhandenen Hardwarekomponenten, insbesondere ein Beobachten, welche Treiber für mindestens eine der Hardwarekomponenten geladen werden und/oder insbesondere ein Beobachten, an welches Peripheriegerät mindestens eine der Hardwarekomponenten meldet, und/oder
- ein Abfragen von mindestens einem Komponenten-Fingerprint und/oder mindestens einem Gerätezertifikat mindestens einer der aktuell vorhandenen Hardwarekomponenten, insbesondere mithilfe eines kryptographischen Protokolls,
zu erstellen.

Bevorzugt ist insbesondere auch, dass Hardwarekomponenten des technischen Systems selbst Treiber aufweisen (vgl. PCIe), welche für die erfindungsgemäße Attestierungskomponente/UEFI-Erweiterung detaillierte Informationen (Daten für den Inventarisierungsdatensatz) zur individuellen Hardware bereitstellen. Die Treiber können insbesondere mit digitalen Signaturen auf deren Authentizität geprüft werden.

In einer weiteren Weiterbildung der Erfindung ist die Erfassungskomponente ausgebildet, die eindeutigen Identifizierungsdaten zu allen aktuell vorhandenen Softwarekomponenten des technischen Systems des Inventarisierungsdatensatzes durch:
- ein Beobachten, und insbesondere ein Logging, der auf dem technischen System ausgeführten Software und/oder
- ein Lesen von Firmwarespeicher und/oder Festplattenspeicher des technischen Systems
zu erstellen.

Das Beobachten (und Logging) entspricht einem passiven Erstellen der eindeutigen Identifizierungsdaten und ist einfacher als Lesen von Firmwarespeicher und/oder Festplattenspeicher, allerdings muss eine Software aber ausgeführten werden, d.h. gestartet sein, um zu beobachtet/gesehen zu werden.

Durch das Lesen von Firmwarespeicher und/oder Festplattenspeicher wird für jede Softwarekomponente insbesondere deren Hashwert in dem Inventarisierungsdatensatz (insbesondere in der SBOM) festgehalten. Dies entspricht einem aktiven Erstellen der eindeutigen Identifizierungsdaten und ist deutlich komplexer als reines Beobachten, denn hierfür muss der Speicher gelesen werden und es muss bekannt sein, wo im Speicher gelesen werden soll und nach was gesucht werden soll.

Die Erfassung der aktuell vorhandenen Softwarekomponenten (durch die SBOM) ist, anders als bei einem Secure Boot, nicht auf die tatsächlich geladenen und ausgeführten Softwarekomponenten der nächsten Bootphase beschränkt. Es kann dadurch eine Gesamtinformation der vorliegenden Softwarekomponenten ermittelt und bestätigt werden.

Die Erfindung umfasst außerdem ein Unified Extensible Firmware Interface (UEFI) aufweisend eine erfindungsgemäße Attestierungskomponente.

Die Erfindung umfasst außerdem einen Hauptprozessor (CPU) aufweisend ein erfindungsgemäßes Unified Extensible Firmware Interface (UEFI) nach Anspruch 9.

Die Erfindung umfasst außerdem ein Gerät aufweisend einen erfindungsgemäßen Hauptprozessor (CPU),
wobei das Gerät insbesondere ausgebildet ist als:
- eine industrielle Recheneinheit (IPC, industrieller PC),
- ein programmierbares Gerät und/oder
- eine offene Compute-Plattform.

In einer weiteren Weiterbildung der Erfindung ist das erfindungsgemäße Gerät ausgebildet in Abhängigkeit des Inventarisierungsdatensatzes und/oder des Vergleichsergebnisses eine Sicherheitsreaktion auszuführen, wobei die Sicherheitsreaktion ausgebildet ist, als:
- ein Sperren einer Teilfunktion des technischen Systems und/oder
- ein Abbrechen eines Vorgangs auf dem technischen System und/oder
- ein Generieren eines Log-Eintrags und/oder
- ein Sperren des gesamten technischen Systems.

Auf dem Gerät, insbesondere der offenen Compute-Plattform laufende Applikationen können somit durch das von der Attestierungskomponente (UEFI-Erweiterung) bereitgestellten Inventarisierungsdatensatzes und/oder des Vergleichsergebnisses (durch das Prüfergebnis oder der bereitgestellten HBOM) feststellen, ob die an die Hardwarekomponenten gestellten Anforderungen erfüllt sind. Bei erkannten Abweichungen können die Applikationen des Geräts insbesondere Teilfunktionen sperren oder die Ausführung komplett verweigern.

In einer weiteren Weiterbildung der Erfindung ist die Sicherheitsreaktion in Abhängigkeit:
- einer durch das Vergleichsergebnis festgestellten Abweichung und/oder
- einer betroffenen Hardwarekomponente und/oder betroffenen Softwarekomponente
festlegbar.

"Betroffene" Hardwarekomponente und/oder "betroffene" Softwarekomponente bedeutet, dass für jene eine Abweichung des Inventarisierungsdatensatzes (der generierten HBOM / SBOM) von dem Referenzdatensatz (und dessen Referenzwerten) besteht. In einer Variante der Erfindung kann die Reaktion in Abhängigkeit der festgestellten Abweichung des Inventarisierungsdatensatzes (der generierten HBOM / SBOM) von dem Referenzdatensatz (und dessen Referenzwerten) konfiguriert werden. So kann insbesondere bei einer Abweichung einer als kritisch eingestuften Hardwarekomponente, d.h. einer betroffenen Hardwarekomponente, der Bootvorgang unterbrochen werden, während für unkritische Abweichungen nur ein Log-Eintrag generiert wird.

Die Erfindung umfasst außerdem ein technisches System aufweisend ein erfindungsgemäßes Gerät.

In einer weiteren Weiterbildung der Erfindung ist das technische System ausgebildet als:
- ein Automatisierungssystem,
- ein industrielles System und/oder
- eine Produktionsanlage.

Die Erfindung umfasst außerdem ein Verfahren zum Bereitstellen eines Vergleichsergebnis bezüglich eines Inventarisierungsdatensatzes und eines Referenzdatensatzes aller aktuell vorhandenen Hardwarekomponenten und/oder aller aktuell vorhandenen Softwarekomponenten eines technischen Systems,
das Verfahren ausführbar durch ein Unified Extensible Firmware Interface (UEFI),
mit den Schritten:
   - ein Erstellen des Inventarisierungsdatensatzes,
      wobei der Inventarisierungsdatensatz eindeutige Identifizierungsdaten zu:
      ∘ allen aktuell vorhandenen Hardwarekomponenten und/oder
      ∘ allen aktuell vorhandenen Softwarekomponenten des technischen Systems enthält,
   - ein Vergleichen des Inventarisierungsdatensatzes und des Referenzdatensatzes, wodurch ein Vergleichsergebnis erstellt wird, und
   - ein Bereitstellen des Vergleichsergebnisses.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

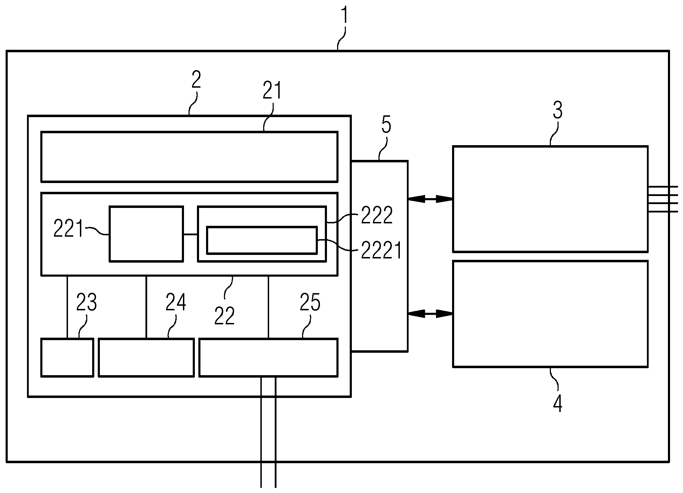

Es zeigt
- Fig. 1: eine schematische Darstellung eines erfindungsgemäßen technischen Systems (1).

### DETAILLIERTE BESCHREIBUNG DER ERFINDUNG

Fig. 1 zeigt eine beispielhafte Realisierung der Erfindung, bei der die erfindungsgemäße UEFI-Erweiterung eines UEFI 222 beim Booten eine HBOM 221 eines Automatisierungsgeräts 1 erstellt und in Form einer kryptographischen BOM-Attestierung 2221 bereitstellt.

Die HBOM 221 enthält im Beispiel alle Teilkomponenten des Industrial PCs (IPCs) 2 bzw. der Recheneinheit 2 (RAM 23, SSD 24, CPU 22, Network Interface (NIC) 25), sowie die externen Komponenten (PLC 3, HMI 4). Die HBOM 221 kann die jeweiligen Hardware-Komponenten identifizieren. Vorzugsweise ist auch eine Information enthalten, die die verwendeten Treiber/Firmware zur Nutzung der jeweiligen Hardware-Komponente und/oder die eingerichtete Konfiguration der jeweiligen Hardware-Komponente angibt. Die HBOM 221 wird im Anschluss mit der Referenzinformation des Maschinenherstellers verglichen und zusätzlich den Applikationen 21 auf dem IPC 2 bereitgestellt. Weiterhin kann die BOM-Attestierung 2221 auch die Firmware-/SoftwareKomponenten umfassen. Es ist jedoch auch möglich, eine separate SBOM-Attestierung bereitzustellen.

Der Industrial PC (IPCs) 2 bzw. die Recheneinheit 2 ist über eine Schnittstelle (O/I) 5 mit einem Programmable Logic Controller 3 (PLC 3) und einem Human Machine Interface 4 (HMI) verbunden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Attestierungskomponente ausgebildet für ein Unified Extensible Firmware Interface (222) eines technischen Systems (1),
die Attestierungskomponente aufweisend:
- eine Erfassungskomponente, ausgebildet einen Inventarisierungsdatensatz (221) zu erstellen,
wobei der Inventarisierungsdatensatz (221) eindeutige Identifizierungsdaten zu:
∘ allen aktuell vorhandenen Hardwarekomponenten und/oder
∘ allen aktuell vorhandenen Softwarekomponenten des technischen Systems (1) enthält,
- eine Vergleichskomponente, ausgebildet ein Vergleichsergebnis (2221) durch ein Vergleichen des Inventarisierungsdatensatzes (221) und einem Referenzdatensatz zu erstellen, und
- eine Bereitstellungskomponente, ausgebildet das Vergleichsergebnis (2221) bereitzustellen.

2. Attestierungskomponente nach Anspruch 1,
wobei der Referenzdatensatz:
- durch die Attestierungskomponente erzeugt wurde und/oder
- von der Attestierungskomponente geladen wurde und/oder
- extern der Attestierungskomponente erzeugt wurde und/oder
- aus mehreren Teil-Referenzdatensätzen zusammengesetzt wurde.

3. Attestierungskomponente nach einem der vorhergehenden Ansprüche,
wobei die Bereitstellungskomponente ausgebildet ist, an:
- eine Komponente des technischen Systems (1) und/oder
- nach extern des technischen Systems (1)
und/oder
wobei die Bereitstellungskomponente außerdem ausgebildet ist:
- den Inventarisierungsdatensatz (221)
bereitzustellen.

4. Attestierungskomponente nach einem der vorhergehenden Ansprüche,
wobei:
- der Inventarisierungsdatensatz (221) und/oder
- das Vergleichsergebnis (2221)
eine kryptographische Beglaubigung aufweisen.

5. Attestierungskomponente nach einem der vorhergehenden Ansprüche,
wobei die Attestierungskomponente:
- in einen Programmcode des Unified Extensible Firmware Interface (222) integriert ist und/oder
- als ein für das Unified Extensible Firmware Interface (222) ladbares Modul ausgebildet ist.

6. Attestierungskomponente nach einem der vorhergehenden Ansprüche,
wobei die Attestierungskomponente einen Authentizitäts- und/oder Integritätsschutz aufweist.

7. Attestierungskomponente nach einem der vorhergehenden Ansprüche,
wobei die Erfassungskomponente ausgebildet ist, die eindeutigen Identifizierungsdaten zu allen aktuell vorhandenen Hardwarekomponenten des technischen Systems (1) des Inventarisierungsdatensatzes (221) durch:
- ein Beobachten von mindestens einem Initialisierungsvorgang der Hardwarekomponenten und/oder
- ein Abfragen von mindestens einem Komponenten-Fingerprint und/oder mindestens einem Gerätezertifikat mindestens einer der aktuell vorhandenen Hardwarekomponenten
zu erstellen.

8. Attestierungskomponente nach einem der vorhergehenden Ansprüche,
wobei die Erfassungskomponente ausgebildet ist, die eindeutigen Identifizierungsdaten zu allen aktuell vorhandenen Softwarekomponenten des technischen Systems (1) des Inventarisierungsdatensatzes (221) durch:
- ein Beobachten der auf dem technischen System (1) ausgeführten Software und/oder
- ein Lesen von Firmwarespeicher und/oder Festplattenspeicher des technischen Systems (1)
zu erstellen.

9. Unified Extensible Firmware Interface (222) aufweisend eine Attestierungskomponente nach einem der vorherigen Ansprüche.

10. Hauptprozessor (22) aufweisend ein Unified Extensible Firmware Interface (222) nach Anspruch 9.

11. Gerät (2) aufweisend einen Hauptprozessor (22) nach Anspruch 10,
wobei das Gerät (2) insbesondere ausgebildet ist als:
- eine industrielle Recheneinheit (2),
- ein programmierbares Gerät (2) und/oder
- eine offene Compute-Plattform (2).

12. Gerät (2) nach Anspruch 11,
ausgebildet in Abhängigkeit des Inventarisierungsdatensatzes (221) und/oder des Vergleichsergebnisses (2221) eine Sicherheitsreaktion auszuführen,
wobei die Sicherheitsreaktion ausgebildet ist, als:
- ein Sperren einer Teilfunktion des technischen Systems (1) und/oder
- ein Abbrechen eines Vorgangs auf dem technischen System (1) und/oder
- ein Generieren eines Log-Eintrags und/oder
- ein Sperren des gesamten technischen Systems (1).

13. Gerät (2) nach Anspruch 12,
wobei die Sicherheitsreaktion in Abhängigkeit:
- einer durch das Vergleichsergebnis (2221) festgestellten Abweichung und/oder
- einer betroffenen Hardwarekomponente und/oder betroffenen Softwarekomponente
festlegbar ist.

14. Technisches System (1) aufweisend ein Gerät (2) nach einem der Ansprüche 11 bis 13,
wobei das technische System (1) insbesondere ausgebildet ist als:
- ein Automatisierungssystem (1),
- ein industrielles System (1) und/oder
- eine Produktionsanlage (1).

15. Verfahren zum Bereitstellen eines Vergleichsergebnis (2221) bezüglich eines Inventarisierungsdatensatzes (221) und eines Referenzdatensatzes aller aktuell vorhandenen Hardwarekomponenten und/oder aller aktuell vorhandenen Softwarekomponenten eines technischen Systems (1),
das Verfahren ausführbar durch ein Unified Extensible Firmware Interface (222),
mit den Schritten:
- ein Erstellen des Inventarisierungsdatensatzes (221), wobei der Inventarisierungsdatensatz (221) eindeutige Identifizierungsdaten zu:
∘ allen aktuell vorhandenen Hardwarekomponenten und/oder
∘ allen aktuell vorhandenen Softwarekomponenten des technischen Systems (1) enthält,
- ein Vergleichen des Inventarisierungsdatensatzes (221) und des Referenzdatensatzes, wodurch ein Vergleichsergebnis (2221) erstellt wird, und
- ein Bereitstellen des Vergleichsergebnisses (2221).
